# EUROPEAN PATENT APPLICATION

(11) **EP 4 432 029 A1**
(43) Date of publication of application: **18.09.2024**
(21) Application number: 23161679.8
(22) Date of filing: 14.03.2023
(51) Int. Cl.: G05B 19/418, G05B 19/4065, G05B 23/02, G05B 19/406

(54) **METHODS AND SYSTEMS FOR MONITORING A MACHINING PROCESS**

(71) Applicant: Siemens Aktiengesellschaft, 80333 München (DE)
(72) Inventor: Aslan, Murat Samil, 97616 Bad Neustadt (DE)
(74) Representative: Siemens Patent Attorneys

(57) **Abstract**

Computer-aided method for monitoring a machining process, the method comprising:
- receiving (1001) a machining data in form of time series, the machining data being collected from a computer numerical control system of a CNC machine during the manufacturing process, and a metadata associated with the machining data,
- selecting (1002) a dynamic metadata item from the metadata,
- visualizing (1003) a portion (2001, 3000, 6000, 6001) of the machining data associated with the dynamic metadata item,
- selecting (1004) a static metadata item from the metadata,
- visualizing (1005) the static metadata item (2000), so that a correlation between the visualized portion of the machining data and the visualized static metadata item is determined,
- monitoring (1006) the manufacturing process based on the determined correlation.

## Description

The subject matter disclosed herein relates to methods and systems for monitoring a machining process and, particularly, to fault detection and/or fault analysis in the machining process.

Furthermore, the subject matter relates to a computer program comprising executable instructions that, when executed by a computer, cause an above-mentioned system to carry out the above-mentioned method.

Methods and systems for aiding monitoring process of machining workpieces with CNC machines are well-known from the prior art. One of the challenges in this field is how to navigate through an enormous amount of data and to localize and to identify errors in the machining process.

The present disclosure provides one possible solution to this problem.

The solution is embodied in a computer-implemented method comprising following steps:
- receiving, e.g., at a first interface, a machining data in form of time series, the machining data being collected from a computer numerical control system of a CNC machine during the manufacturing process, and a metadata associated with the machining data,
- selecting, e.g., at a visualization device, a dynamic metadata item from the metadata,
- visualizing, e.g., at the visualization device, a portion of the machining data associated with the dynamic metadata item,
- selecting, e.g., at the visualization device, a static metadata item from the metadata,
- visualizing, e.g., at the visualization device, the static metadata item, so that a correlation between the visualized portion of the machining data and the visualized static metadata item is determined,
- monitoring the manufacturing process based on the determined correlation.

The machining data is in particular a signal, e.g., a control signal to one or more machine elements. This can be a spindle torque signal, a position signal for a target or desired position of a machine axis, e.g., linear or rotational axis, etc.

The metadata is a data about the machining data. The metadata provides context. It comprises static metadata and dynamic metadata, wherein the static metadata is constant over some period of time. The dynamic metadata, however, varies at the same time frame.

In general, static metadata is information that does not change frequently or is unlikely to change, while dynamic metadata is information that is more likely to change or changes frequently.

Based on the above, in the context of the present invention, the term "dynamic metadata item" is understood to mean a machining parameter, which value varies quickly during the machining process, e.g., (axis, e.g., linear or rotational) position, spindle torque, current, etc. The measurement data associated with such parameters is usually available in form of time series. The term "static metadata item" is understood to mean a parameter associated with the machining process, the parameter varying slowly during the machining process. E.g., this can be type of operation GO/non-GO, etc.

In other words, the static metadata provides information about the data that remains constant on a predetermined timeframe, while dynamic metadata provides information about the data that changes on the predetermined timeframe. The predetermined timeframe defines "quickly" and "slowly" and can be associated with or based on a sampling rate with which the data is collected. The sampling rate is usually on the order of few hundreds of Hz, e.g., 100 Hz to 500 Hz, especially 500 Hz, to KHz, i.e., the timeframe can be milliseconds or shorter. So, e.g., parameter that vary on a time scale of order of milliseconds or faster can be considered as dynamic metadata items.

In an embodiment, the method further comprises:
- selecting at least one further metadata item, which is preferably different from the dynamic and the static metadata items,
- if the further metadata item is a dynamic metadata item, visualizing a further portion of the machining data associated with the at least one further dynamic metadata item or
- if the further metadata item is a static metadata item, visualizing the further static metadata item, so that at least one further correlation between
   * the visualized portion of the machining data and/or the static metadata item and the further portion of the machining data or
   * the visualized portion of the machining data and/or the static metadata item and the further static metadata item
      is determined,
- monitoring the manufacturing process based on the at least one further correlation.

In an embodiment, the method further comprises:
- receiving an input (at a second interface, e.g., a user input via mouse, to select a portion of the visualized portion of the machining data,
- based on the received input, highlighting/marking the selected portion of the visualized portion of the machining data and a portion of the visualized metadata item that corresponds to the selected portion of the visualized portion of the machining data.

This embodiment facilitates establishing of visual correlation.

In an embodiment, the highlighting/marking comprises displaying further metadata associated with the selected portion of the visualized portion of the machining data.

In an embodiment, the static metadata items are: type of movement GO/non-GO, type of operation (milling, e.g., face milling), drilling (e.g., hole drilling, thread drilling), deburring (window deburring), channel number class (for multichannel machining tools), tool ID class, part program class, call stack level, specific NC program and/or program subroutine name etc.

In an embodiment, the dynamic metadata items are: (target/actual) position of a particular axis (PX1, PY1, PZ1, ...), spindle tip position (provided in MCS or WCS), spindle torque, other machining parameters etc.)

In an embodiment, the method further comprises:
- selecting, e.g., at the visualization device, at least two, preferably three, dynamic metadata items from the metadata,
- visualizing, e.g., at the visualization device, at least two, preferably three, portions of the machining data, wherein each of the selected dynamic metadata items is associated with a corresponding portion of the machining data, and wherein each portion of the machining data is associated with a corresponding coordinate of an orthogonal coordinate system, wherein the orthogonal coordinate system is utilized for visualization the at least two, preferably three, portions of the machining data,
- marking the visualized portions of the machining data by using the static metadata item.

In an embodiment, the method further comprises:
- selecting at least one further static metadata item,
- marking the visualized portions of the machining data by using the at least one further static metadata item.

In an embodiment, the method further comprises:
- visualizing (at the visualization device) a portion of a part program associated with the visualized portion of the machining data.

The solution is also provided as a system for monitoring a machining process, the system comprising:
- a first interface for receiving a machining data in form of time series, said machining data being collected from a computer numerical control system of a CNC machine during the manufacturing process and a metadata associated with the machining data,
- a visualization device for
   * selecting metadata items from the metadata,
   * visualizing a portion of the machining data associated with the dynamic metadata item and the static metadata item, so that a correlation between the visualized portion of the machining data and the visualized static metadata item is determined, and
   * monitoring the manufacturing process based on the determined correlation.

The above and other aspects and advantages of the subject matter disclosed herein will be further discussed in conjunction with the accompanying drawings, which indicate only some possible ways that may be practiced. The like reference characters in the drawings refer to like parts throughout.
FIG 1 shows a system for manufacturing,
FIG 2 illustrates an embodiment of a method for monitoring a machining process,
FIG 3 to FIG 8 illustrate different aspects of visualization of the machining data to establish one or more visual correlations and to detect errors in the machining process based on such correlations.

The reference signs used in the figures and in the claims are used for demonstrative purposes and shall not be considered as a limitation of corresponding claim features.

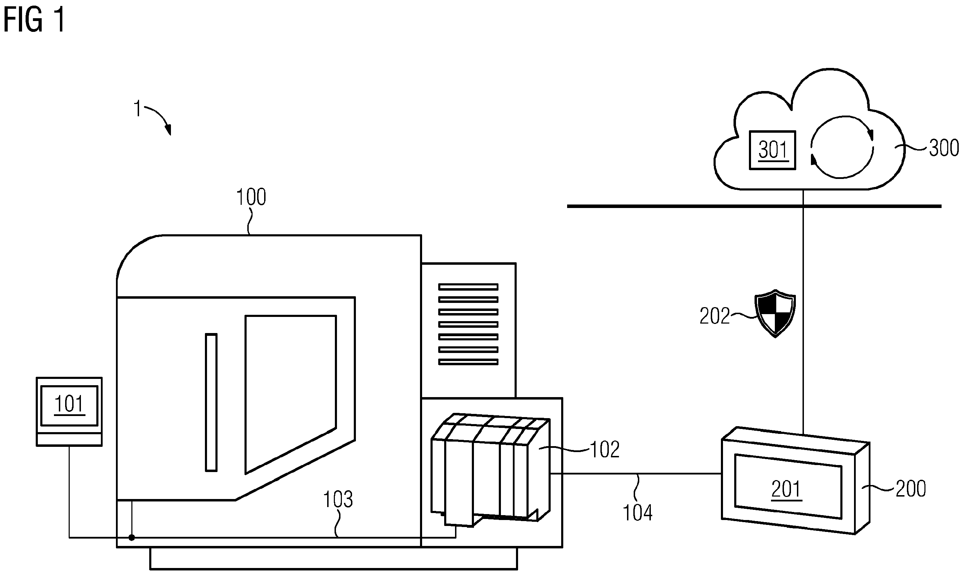

FIG 1 illustrates an example of a system 1 for manufacturing. The system is located at a shop floor and comprises a machining tool 100 and an edge device 200.

The machining tool 100 has an operating unit 101 and a numerical control unit 102. The operating unit 101 and the numerical control unit 102 are connected via an ethernet cable 103.

To collect process relevant information the edge device 200 is connected to the machining tool 100. The edge device 200 can be designed as an industrial computer and comprises means for storing information, running machine tool specific computer programs 201 - so-called edge apps - for collecting, processing, analyzing the process relevant data generated while the machining tool 100 is in operation.

Being a platform for the edge apps the edge device 200 is connected to the machining tool 100 and in particular to the numerical control unit 102 via industrial ethernet 104.

The edge device 200 can be mounted on the machining tool 100.

The edge device 200 can be also connected to cloud services 300, e.g., via a secure communication link 202. The cloud services 300 provide computing resources for more involved analysis of the collected process information. The connection 202 can be a wired or wireless connection.

The data analysis can be performed by means of cloud apps 301 and have various goals: training of machining learning models, condition monitoring, root cause analysis, behavior prediction, etc.

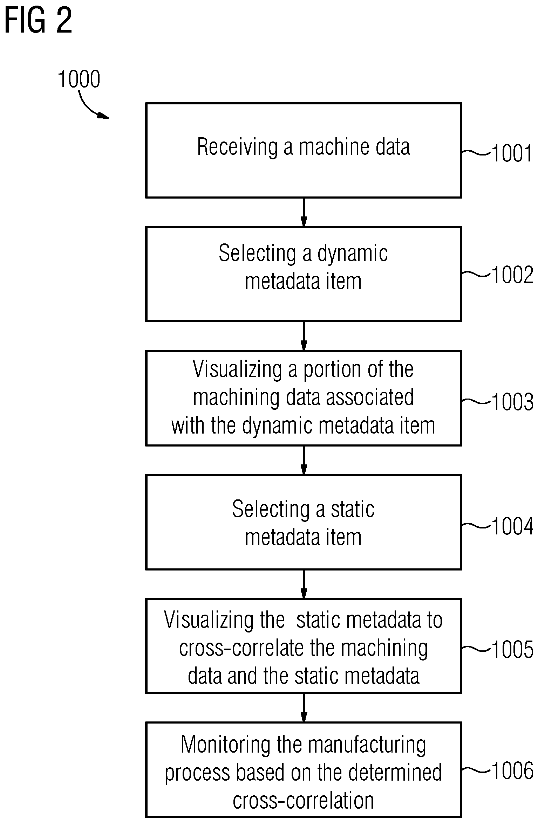

FIG 2 illustrates an embodiment of a method 1000 for monitoring a machining process and especially for fault detection and/or analysis in the machining process. The steps of the method can be realized as a program code implemented in a cloud app 301 or in an edge app 201.

At a first step 1001 the cloud app 201 and/or the edge app 201 receives, via an interface (not shown), a machining data, which had been or is being collected from a computer numerical control (CNC) system 101, 102 of a CNC machine 100 during the manufacturing process. The machining data is in form of time series. The received data also comprises a metadata associated with the machining data.

The metadata is a data about the machining data. The metadata provides context. It comprises static metadata and dynamic metadata, wherein the static metadata is constant over a predetermined period of time. The dynamic metadata, however, varies at the same time frame.

The static metadata can be a data about a type of (axis) movement GO/non-GO, type of operation (milling, e.g., face milling, drilling, e.g., hole drilling, thread drilling, deburring, e.g., window deburring, etc.), channel number class (for multichannel machining tools), tool ID class, part program class (e.g., call stack level, specific code line of the NC-code, part program and/or part program subroutine name etc.)

The dynamic metadata can be a data about time stamp, (target/actual) position of a particular axis (PX1, PY1, PZ1, ...), spindle tip position (provided in MCS or WCS), spindle torque, other machining parameters (current, force) that vary (quickly) on a time scale on which static metadate does not change etc.

In the next step 1002 a dynamic metadata item is selected from the metadata. In an embodiment, the selection of the dynamic metadata item is performed at a visualization device, e.g., at a display device of a computing device, e.g., personal computer, laptop, tablet, or similar. There, a user can be asked to select the dynamic metadata item from the metadata. Possible dynamic metadata items can be presented in a list, from which the user can choose one or another item.

In an embodiment, the dynamic metadata item is target (desired) position of one or more axes X1, Y1, Z1 and/or torque of a spindle of the machining tool 100.

After selecting a dynamic metadata item, a portion of the machining data associated with the dynamic metadata item can be visualized 1003. In other words, a portion of the time series data that is associated with the selected dynamic metadata item is visualized, e.g., shown at the display device.

Additionally, a static metadata item from the metadata is selected 1004. This can be also performed at the visualization device. In an embodiment, the user is asked to select the static metadata item, which is to be correlated or cross-referenced with the portion of the machining data associated with the selected dynamic metadata item.

In an embodiment, the selected metadata item is a type of movement, e.g., GO-movement.

At 1005 the static metadata item is visualized, so that visual cross relation between the visualized portion of the machining data and the visualized static metadata item is established thereby determining a correlation between these da-tasets.

In an embodiment, the static metadata idem is visualized for the same time interval as the visualized portion of the machining data. E.g., the static metadata can be visualized above or below the visualized portion of the machining data. This allows to establish (visually) a relationship between regions of the static metadata sections and corresponding regions of the visualized portion of the machining data.

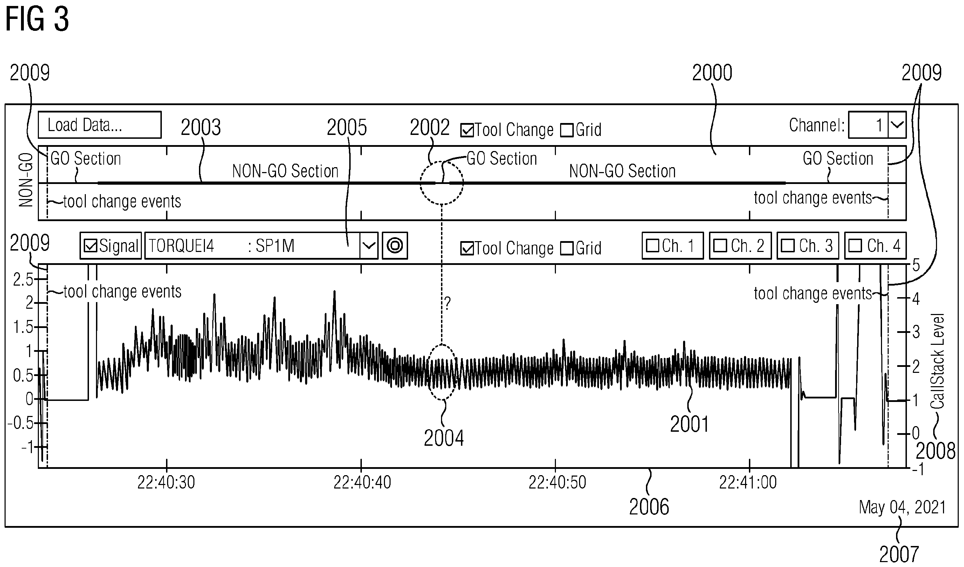

In an embodiment illustrated in FIG 3, GO/non-GO data 2000 is correlated to spindle torque time series 2001, so that a relationship between GO/non-GO sections 2002, 2003 and the corresponding regions 2004 of the visualized portion of the machining data is established.

In an embodiment, it is possible to select a portion of the visualized machining data and increase or decrease the (time) resolution for the selected portion of the time series. The resolution for the visualized static metadata item can be adapted automatically to the new resolution. This can facilitate the analysis of the established correlation.

In an embodiment, a correlation between the spindle torque and the type of movement (G0/Non-G0) is determined.

At 1006 the determined correlation is used to monitor the manufacturing process. The monitoring can comprise fault detection and/or analysis.

Moreover, within the monitoring various types of machining operations and also single machining operations of the same type can be detected and visualized in static and/or dynamic way.

An island view - GO/non-GO - helps to identify the single operations and also localize the region, where this operation is performed on the workpiece.

Visual correlation between the island view, the signal and the 3D view are established.

FIG 3 illustrates the visualization of the portion of the machining data, which is a spindle torque signal data. The term "spindle torque" is a dynamic metadata item (see "TORQUE|4:SP1M" in FIG 3). The spindle torque signal data is illustrated in a form of time series.

In an embodiment, the spindle torque can be chosen from other dynamic metadata items via a drop-down menu 2005.

When the choice is made, a corresponding part of the machining data, e.g., of a signal (spindle torque signal, desired position signal for a linear or rotational axis, etc.) is selected and displayed at the visualization device.

The spindle torque signal is cross-referenced with the information about the type of the movement. Information whether the movement is G0 or not is presented over the same time scale 2006 and so visually correlated with the spindle torque time series. The information whether the movement is G0 or not, is a static metadata item, which is constant over a predetermined period of time in which the spindle torque varies significantly. The period of time can be predetermined by a sampling rate.

In this way it can be immediately deduced, which part of the presented time-series corresponds to the actual machining of a workpiece, e.g., removal of the material from the workpiece, and which does not. This eases the fault analysis and improves monitoring of the machining process.

In an embodiment, further static metadata items can be visualized, e.g., displayed.

FIG 3 shows the date of the operation 2007, the CallStack Level 2008.

In an embodiment, the metadata can be analyzed to extract some process-specific information that can be visualized too. FIG 3 shows on both plots, e.g., at which point a tool change happened, so-called tool change events 2009.

FIG 3 represents data that corresponds to face milling operation.

In an embodiment, at least one further metadata item (different from the dynamic and the static metadata items) can be selected.

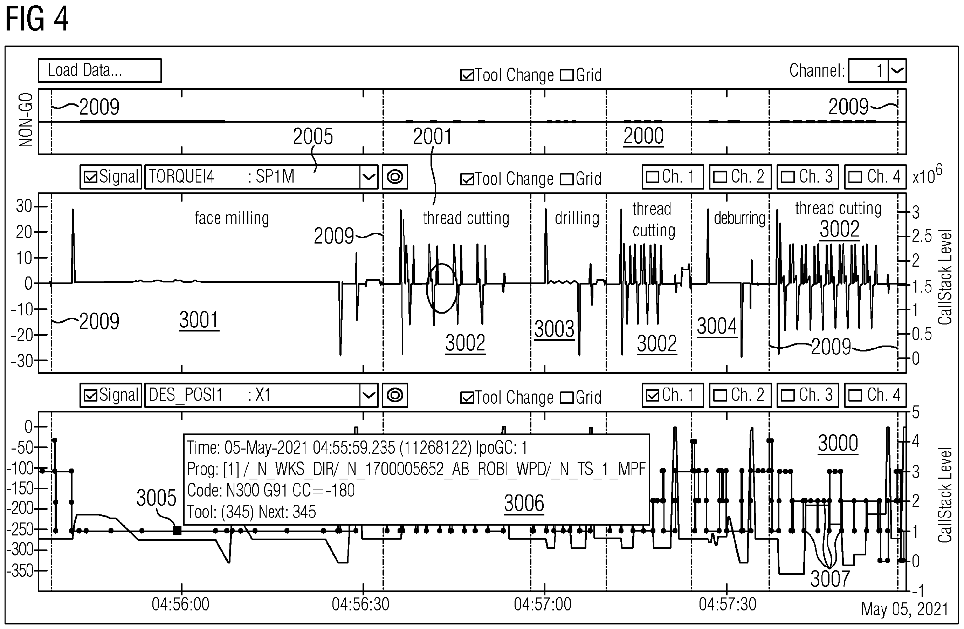

In this case, if this item is a dynamic metadata item, a further portion of the machining data associated with this dynamic metadata item can be visualized (see FIG 4).

If, however, the further metadata item is a static metadata item, this further static metadata item can be visualized.

Depending on which of the above is true the visualization can be performed to achieve at least one further correlation between
* the visualized portion of the machining data and/or the static metadata item and the further portion of the machining data or
* the visualized portion of the machining data and/or the static metadata item and the further static metadata item.

Afterwards monitoring the manufacturing process based also on the at least one further correlation can be performed.

Determining more correlations facilitates the analysis of the data.

FIG 4 illustrates an embodiment, where the further metadata item is a dynamic metadata item - target position of X-axis "DES_POS|1: X1" 3000.

The portion of the machining data corresponding to the target movement of the X1-axis 3000 is visualized to cross-reference it to the spindle torque signal 2001 and to the previously visualized G0/Non-G0 data 2002.

By analyzing the correlations, it can be deduced not only, when a tool change took place 2009, but also which machining operation had been carried out, when and how often.

FIG 4 shows data that from several machining operations of different types: face milling 3001, thread cutting 3002, drilling 3003, and window deburring 3004 as machining operations that are identified based on visualized correlations between the static and dynamic metadata items.

In an embodiment, an input, e.g., at a second interface, e.g., a user input via mouse, to select a portion of the visualized portion of the machining data can be received, and, based on the received input, the selected portion of the visualized portion of the machining data can be marked.

In an embodiment (see FIG 4), the marker 3005 can comprise further metadata 3006 associated with the selected portion of the visualized portion of the machining data (e.g., time, tool ID, part program line number, etc.).

Moreover, FIG 4 shows that all high-frequency events 3007, wherein each high-frequency event can correspond to a new command line in the part program, can be displayed in the time series. In this way, exact time of execution of a particular line of the part program can be deduced and its direct influence on the one or more signals 2001, 3000 can be visualized.

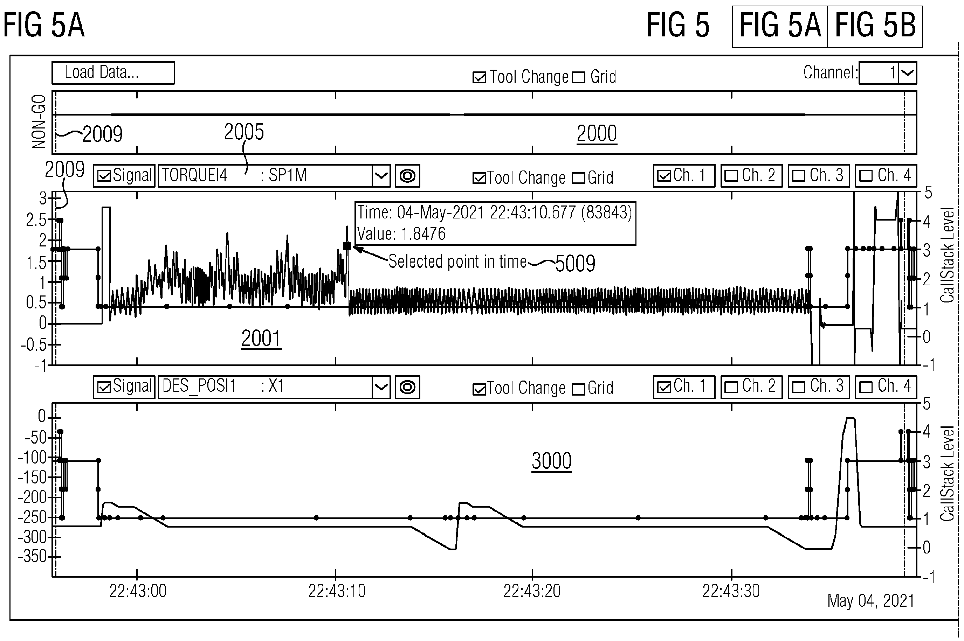

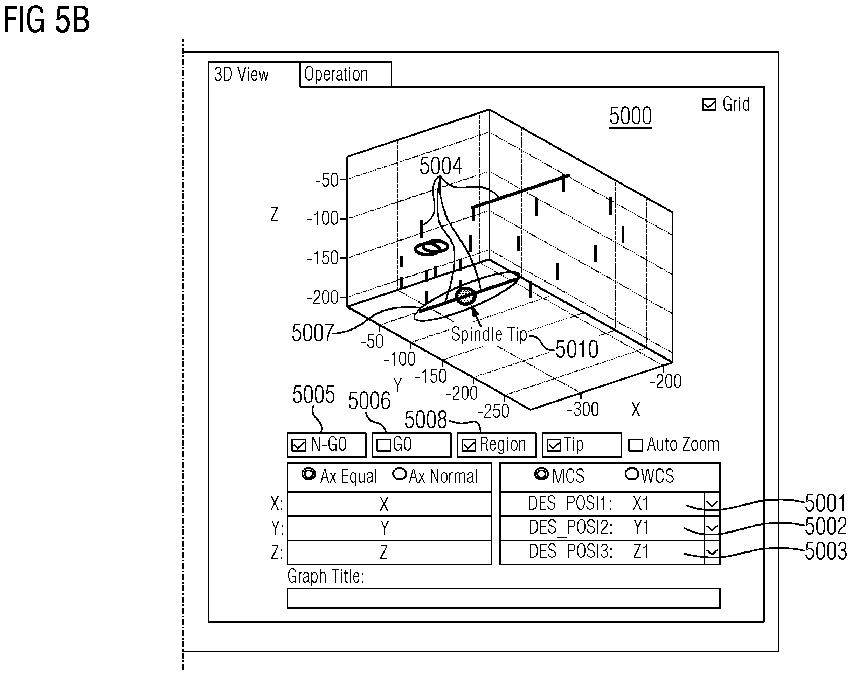

In an embodiment, static metadata items can be used to mark regions on a 3D plot 5000. The 3D view can be visualized on the same visualization device and at the same time as the time series and metadata item. A left part of FIG 5 - FIG 5A - shows time series data for the spindle torque signal 2001 and for the desired position signal of the X1-axes 3000 and the GO/non-GO data 2000, whereas a right part of FIG 5 - FIG 5B - shows the 3D view 5000.

The 3D view 5000 can be generated by using three portions of the machining data by associating each portion to one of the cartesian axes. For each portion there is a dynamic metadata item and for different portions the dynamic metadata items can be different.

Each portion can be chosen by selecting a dynamic metadata item from a drop-down menu 5001, 5002, 5003. Each drop-down menu corresponds to one of the cartesian axes. FIG 5B illustrates a 3D view 5000, where different portions of target position signal data for different linear axes X1, Y1, Z1 are associated with different cartesian axes X, Y, Z, e.g., in machine coordinate system. The corresponding dynamic metadata item is the target position of the corresponding axis "X1" DES_POS|1, "Y1" DES_POS|2, "Z1" DES_POS|3. It appears to be appropriate in this case to associate the cartesian axis X with X1, Y with Y1 and Z with Z1. The static metadata item can be, e.g., the non-GO movement. The correlation of the static metadata item with the position data, i.e., with machining data associated with three dynamic metadata items, is implemented by highlighting corresponding regions in the 3D plot 5000. E.g., FIG 5B illustrates an embodiment, where only non-GO portions 5004 are highlighted and shown. The highlighting can be performed by clicking on "N-G0" region 5005 on the visualization device.

This provides information on where exactly (on the workpiece) the non-GO movement was performed and a cross reference to time series shown in FIG 5A, thereby improving the identification of different types of machining operations and their localization on the workpiece, because this identification is possible not only in time domain (FIG 5A) but also in space (FIG 5B). It will be appreciated that also G0 sections can be displayed, e.g., by clicking on "G0" region 5006 of the visualization device.

In an embodiment, a region 5007 corresponding to the visualized portion of the time series 2001, 3000 (see FIG 5A) can be highlighted in the 3D view 5000. This can be implemented by clicking "Region" part 5008 on the visualization device.

Moreover, a selected point in time 5009 on the time series can be automatically marked on the 3D view.

In this way, e.g., a fourth dynamic metadata item can be visualized on the 3D view 5000.

E.g., spindle tip 5010 and/or region can be visualized in the 3D view 5000 that correspond to the marked point 5009 at the time series.

Moving the selected time point in time 5009 in the time series data, e.g., by using a mouse cursor or a tip of a finger, allows to visualize a movement of a subject, e.g., a spindle tip, in the 3D view tab 5000.

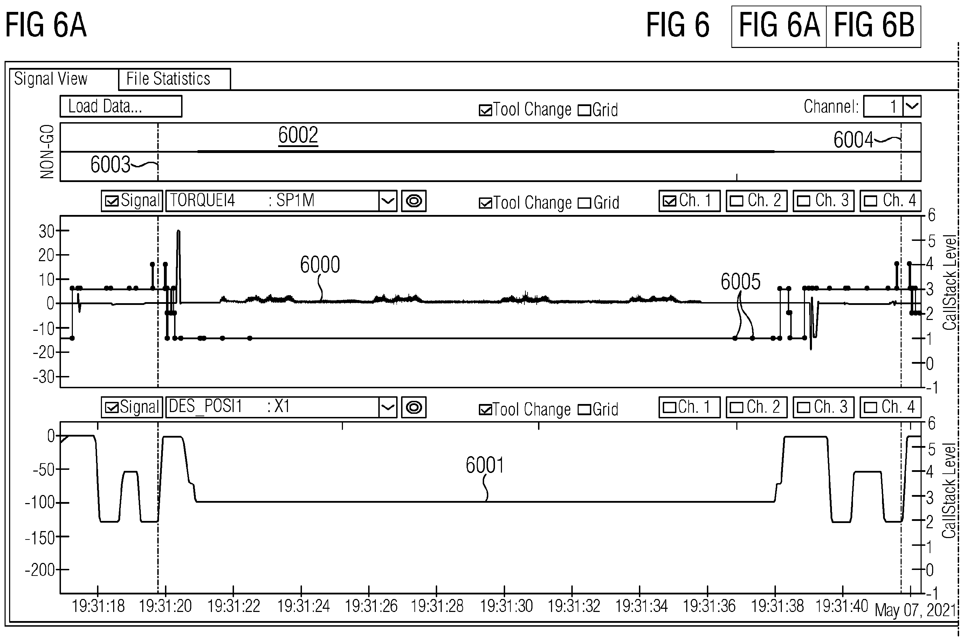

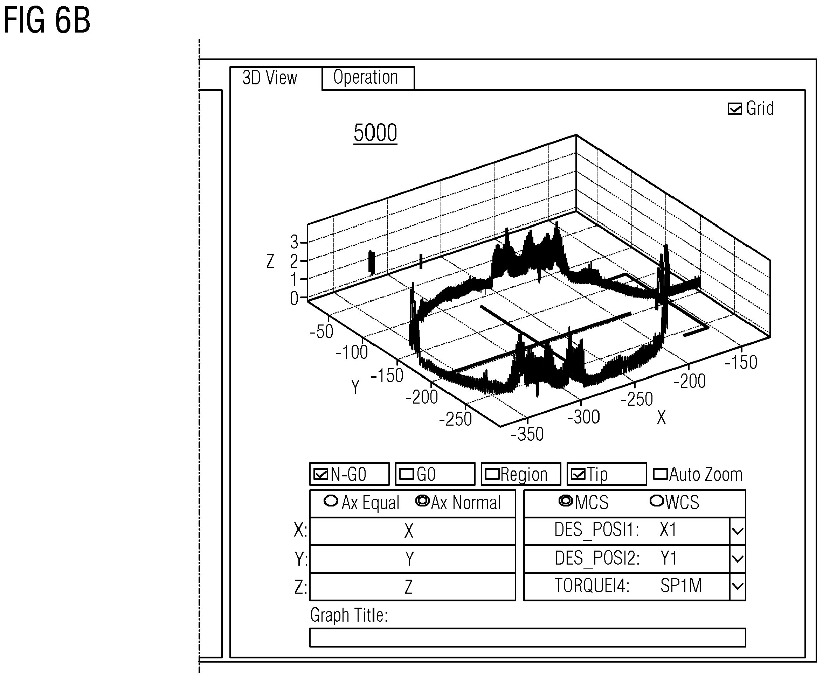

FIG 6 illustrates an embodiment, in which the spindle torque is associated with the Z axis of cartesian coordinate system in the 3D view 5000 (see FIG 6B) and non-GO regions are marked.

FIG 6A represents time series data for face milling: spindle torque signal 6000, target position signal 6001, and G0/non-G0 data 6002 between two tool change events 6003 and 6004. Corresponding NC program commands 6005 are represented on the spindle torque signal 6000.

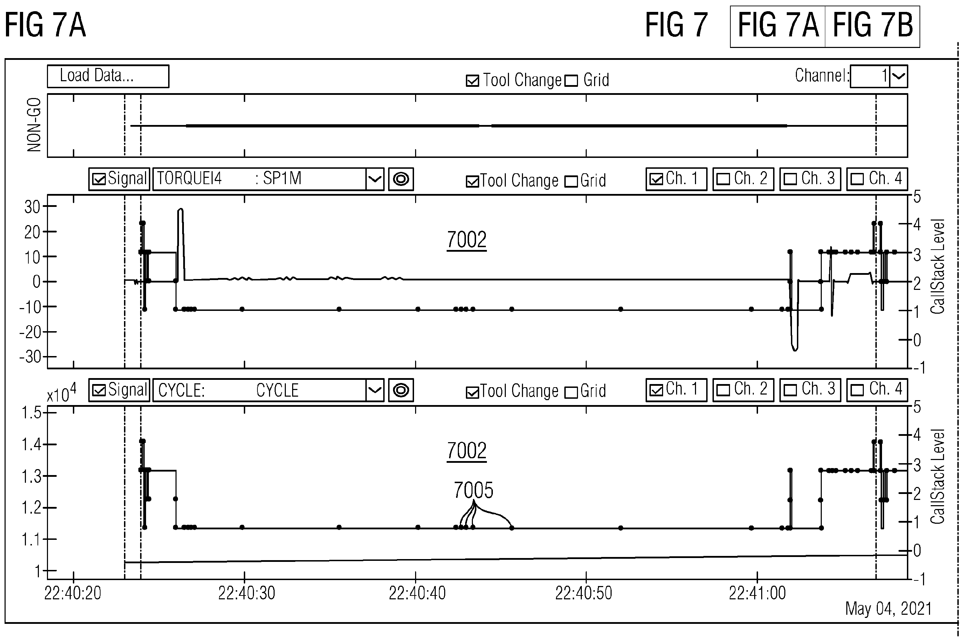

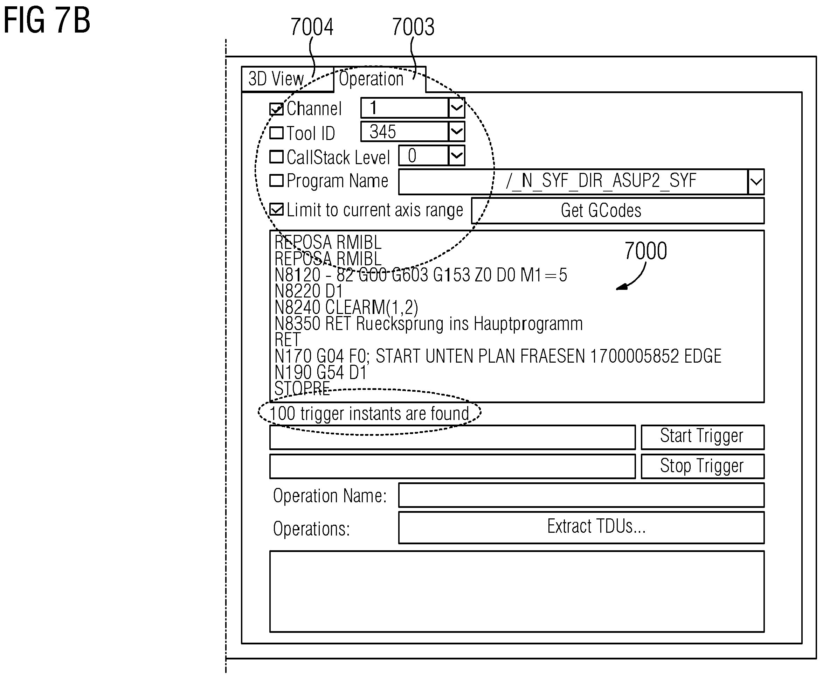

In an embodiment, the metadata can be visualized along with the part program code (see FIG 7).

The NC program code 7000 can be visualized in an operation tab 7001 (FIG 7B) at the same time as the time series data 7002.

In an embodiment, the user can easily switch between the operation tab 7001 and the 3D view tab by clicking on a corresponding button 7003, 7004.

Several static metadata items can be visualized and correlated with the time series data. E.g., channel number, tool ID, call stack level, part program name etc.

The part program code 7000 can be correlated with the time series 7002 so that single program lines are displayed in the time series (connected dots in the time series in FIG 7). This facilitates finding a particular program line and identifying time of execution of this particular line.

In an embodiment, choosing a program line in the program code 7000 in the operation tab 7001 a corresponding region marked in the time series 7002. This can be done, e.g., by highlighting a corresponding point 7005 at the NC program code representation on one or more time series or by generating a vertical line on the corresponding place in the time series 7002.

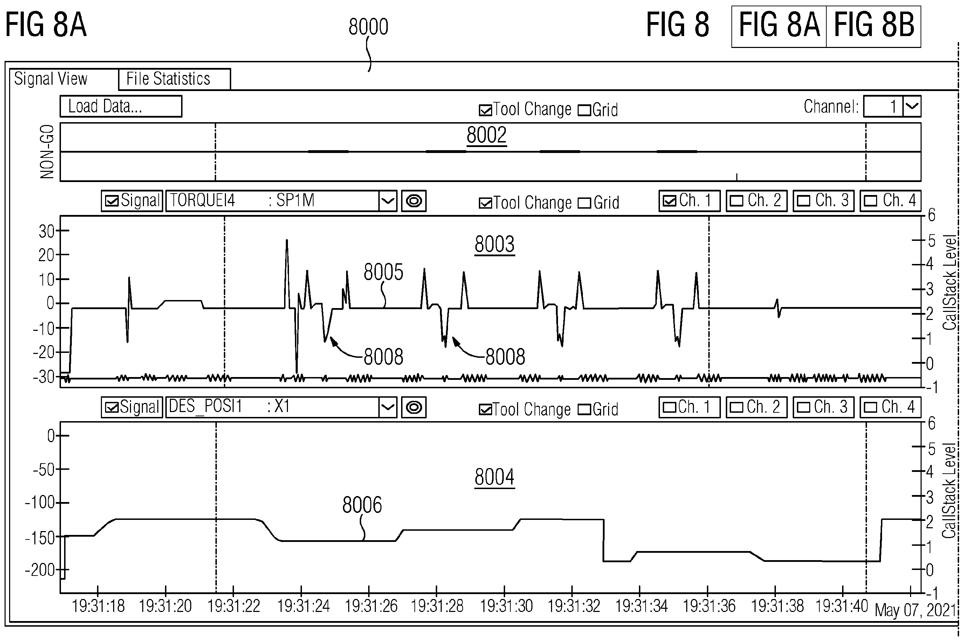

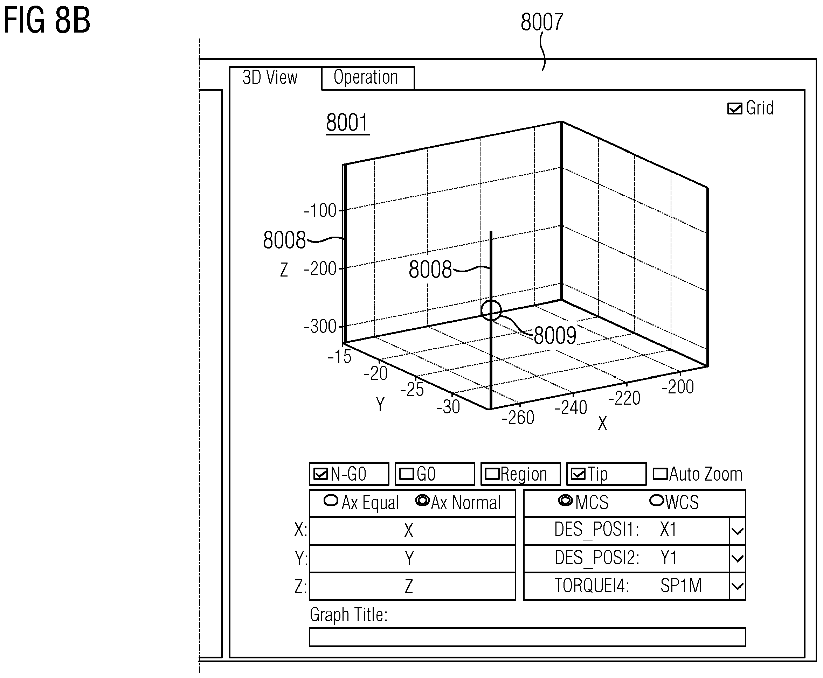

Turning to FIG 8 a view for monitoring a drilling operation is illustrated. This comprises again two regions: the signal or file statistics view part 8000 and the 3D or the operation view part 8001, wherein the user can choose a particular view by switching tabs. The user can be (automatically) requested to choose a particular view, which is more suitable for a fault detection and/or manufacturing data analysis.

In the signal view there are, as already described above, three windows 8002, 8003, 8004.

A first window 8002 is arranged on the top of the second 8003 and the third window 8004 and designed to represent static metadata associated with the selected portion of the time series of the manufacturing data parameters, e.g., spindle torque, axis' target position, etc. The second window 8003 is arranged just below the first window and is designed to display a first signal, e.g., a spindle torque signal 8005 or cycle signal or position signal. The third window 8004 is arranged just below the second window 8003 and is designed to display a second signal, e.g., a target position 8006 of an axis, e.g., of a linear or rotational axis. The first and the second signals 8005, 8006 are the portions of the machining data associated with (two different) dynamic metadata items.

The 3D view 8007 is a 3D representation of the same portion of the machining data, which is represented in the signal view. Each axis is associated with a (different) dynamic metadata item, e.g., target position of a linear axis X1, Y1, Z1 of the machining tool.

The 3D view 8007 allows to correlate 8008 information from the signal view (in time domain) to space domain. In other words, it correlates information on when a particular part of operation was carried out (signal view windows 8002, 8003, 8004) with the information where this operation was carried out.

Each of the four drilling operations immediately recognizable in the first and/or second window 8002, 8003 (time domain) is visually correlated to a corresponding vertical line on the 3D view 8007, e.g., in machine coordinate system - MCS (space domain).

In this way the machining errors can be easily identified and localized on the workpiece and in time simultaneously.

The spindle tip position is marked by a circle 8009 in the 3D view 8007.

The circle 8009 can be moved, e.g., by selecting and dragging it with a mouse or a fingertip. When the circle 8009 is selected a corresponding point is selected in the signal view, e.g., in the second 8002 and/or third 8003 window on the corresponding time series (cf. FIG 5).

When an irregularity in signal and/or 3D view is detected, moving the circle 8009 to the detected irregularity facilitates its localization and provide comprehend information on values of all (measured) machining parameters at the irregularity. This can ease error detection significantly.

Together the views 8000 and 8001 provide a comprehensive view for monitoring and fault detection in the machining process.

A system for monitoring can comprise a first interface for receiving the machining data in form of time series, said machining data being collected from a computer numerical control system of a CNC machine during the manufacturing process and a metadata associated with the machining data, and the visualization device to allow for data visualization and user-interactions, e.g., as described above.

The above-described embodiments of the present disclosure are presented for purposes of illustration and not of limitation. In particular, the embodiments described with regard to figures are only few examples of the embodiments described in the introductory part. Technical features that are described with regard to systems can be applied to augment methods disclosed herein and *vice versa.*

## Claims

1. Computer-aided method for monitoring a machining process, the method comprising:
- receiving (1001) a machining data in form of time series, the machining data being collected from a computer numerical control system of a CNC machine during the manufacturing process, and a metadata associated with the machining data,
- selecting (1002) a dynamic metadata item from the metadata,
- visualizing (1003) a portion (2001, 3000, 6000, 6001) of the machining data associated with the dynamic metadata item,
- selecting (1004) a static metadata item from the metadata,
- visualizing (1005) the static metadata item (2000), so that a correlation between the visualized portion of the machining data and the visualized static metadata item is determined,
- monitoring (1006) the manufacturing process based on the determined correlation.

2. Method of claim 1, further comprising:
- selecting at least one further metadata item,
- if the further metadata item is a dynamic metadata item, visualizing a further portion of the machining data associated with the at least one further dynamic metadata item or
- if the further metadata item is a static metadata item, visualizing the further static metadata item, so that at least one further correlation between
* the visualized portion of the machining data and/or the static metadata item and the further portion of the machining data or
* the visualized portion of the machining data and/or the static metadata item and the further static metadata item
is determined,
- monitoring the manufacturing process based on the at least one further correlation.

3. Method of claim 1 or 2, further comprising:
- receiving an input to select a portion of the visualized portion of the machining data,
- based on the received input, marking the selected portion of the visualized portion of the machining data and a portion of the visualized metadata item that corresponds to the selected portion of the visualized portion of the machining data.

4. Method of claim 3, wherein the marking comprises displaying further metadata associated with the selected portion of the visualized portion of the machining data.

5. Method of any one of claims 1 to 4, wherein the static metadata items: type of movement, type of operation, channel number class, tool ID class, part program class.

6. Method of any one of claims 1 to 5, wherein the dynamic metadata items: position of a particular axis (PX1, PY1, PZ1, ...), spindle tip position, spindle torque

7. Method of any one of claims 1 to 6, further comprising:
- selecting at least two, preferably three, dynamic metadata items from the metadata,
- visualizing at least two, preferably three, portions of the machining data, wherein each of the selected dynamic metadata items is associated with a corresponding portion of the machining data, and wherein each portion of the machining data is associated with a corresponding coordinate of an orthogonal coordinate system, wherein the orthogonal coordinate system is utilized for visualization the at least two, preferably three, portions of the machining data,
- marking the visualized portions of the machining data by using the static metadata item.

8. Method of claim 7, further comprising:
- selecting at least one further static metadata item,
- marking the visualized portions of the machining data by using the at least one further static metadata item.

9. Method of any one of claims 1 to 8, further comprising:
- visualizing a portion of a part program associated with the visualized portion of the machining data.

10. System for monitoring a machining process, the system comprising:
- a first interface for receiving a machining data in form of time series, said machining data being collected from a computer numerical control system of a CNC machine during the manufacturing process and a metadata associated with the machining data,
- a visualization device for
* selecting metadata items from the metadata,
* visualizing a portion of the machining data associated with the dynamic metadata item and the static metadata item, so that a correlation between the visualized portion of the machining data and the visualized static metadata item is determined, and
* monitoring the manufacturing process based on the determined correlation.

11. Computer program comprising executable instructions that, when executed by a computer, cause a system of claim 10 to carry out a method of any one of claims 1 to 9.
